# FASCICULE DE BREVET EUROPEEN

(11) **EP 2 938 586 B1**
(45) Date de publication et mention de la délivrance du brevet: **18.08.2021**
(21) Numéro de dépôt: 13818315.7
(22) Date de dépôt: 16.12.2013
(51) Int. Cl.: C03C 17/34, G02B 1/10, G02B 27/00, G02B 1/18, G02B 1/04, G02B 1/12, G02C 7/02

(54) **LENTILLE OPHTALMIQUE APTE AU DÉBORDAGE COMPRENANT UNE BICOUCHE HYDROPHOBE ET UNE COUCHE TEMPORAIRE DE FLUORURE MÉTALLIQUE**
ZUM EINFASSEN GEEIGNETE LINSE MIT EINER HYDROPHOBEN DOPPELSCHICHT UND EINER TEMPORÄREN SCHICHT EINES METALLFLUORIDES.
OPHTHALMIC LENS ADAPTED FOR EDGING COMPRISING A HYDROPHOBIC BILAYER AND A TEMPORARY LAYER OF A METAL FLUORIDE

(30) Priorité: 28.12.2012 FR 1262953
(43) Date de publication de la demande: 04.11.2015
(73) Titulaire: Essilor International, 94220 Charenton-le-Pont (FR)
(72) Inventeur: HERVIEU, Grégory, F-94220 Charenton-Le-Pont (FR); VALENTI, Christophe, F-94220 Charenton-Le-Pont (FR)
(74) Mandataire: Jacobacci Coralis Harle
(86) Numéro de dépôt international: PCT/FR2013/053104
(87) Numéro de publication internationale: WO 2014/102481

(56) Documents cités:
- WO-A1-02/092524
- FR-A1- 2 907 915
- FR-A1- 2 921 162
- FR-A1- 2 924 233
- FR-A1- 2 938 255
- US-A1- 2012 262 790
- None

## Description

La présente invention concerne une lentille ophtalmique pour lunettes, comportant un revêtement antisalissure (top-coat) et une surcouche temporaire préalablement déposée sur le revêtement antisalissure, rendant la lentille apte au débordage et conduisant, après retrait de la surcouche temporaire, à une lentille ophtalmique aux propriétés antisalissure améliorées par rapport aux lentilles ophtalmiques obtenues à partir de celles comportant une surcouche temporaire classique.

Une lentille résulte d'une succession d'opérations de moulage et/ou de surfaçage/polissage qui déterminent la géométrie des deux surfaces optiques convexe et concave de ladite lentille, puis de traitements de surface appropriés.

La dernière étape de finition d'une lentille ophtalmique est l'opération de débordage qui consiste à usiner la tranche ou périphérie de la lentille de façon à la conformer aux dimensions requises pour adapter cette lentille à la monture de lunettes dans laquelle elle est destinée à prendre place.

Le débordage est réalisé généralement sur une meuleuse comprenant des meules diamantées et/ou des têtes fraiseuses qui effectuent l'usinage tel que défini ci-dessus.

La lentille est maintenue, lors de cette opération, par des organes de blocage intervenant axialement.

Le mouvement relatif de la lentille par rapport à la meule est contrôlé, généralement numériquement, afin de réaliser la forme souhaitée.

Comme cela apparaît, il est tout à fait impératif que la lentille soit fermement maintenue lors de ce mouvement.

Pour cela, avant l'opération de débordage, on effectue une opération de glantage de la lentille, c'est à dire que l'on vient positionner sur la surface convexe de le lentille un moyen de maintien ou gland.

Un patin de maintien, tel qu'une pastille autocollante, par exemple comportant un adhésif double face (de type PSA-pressure sensitive adhesive-adhésif sensible à la pression), est disposé entre le gland et la surface convexe et/ou concave, de préférence la surface convexe de la lentille, ce dernier cas sera décrit plus en détail dans la suite de la présente demande.

La lentille ainsi équipée est positionnée sur l'un des organes axiaux de blocage précités, le second organe de blocage axial venant alors serrer la lentille sur sa face concave par l'intermédiaire d'une butée, généralement en élastomère. Lors de l'usinage, un effort de couple tangentiel est généré sur la lentille, ce qui peut engendrer une rotation de celle-ci par rapport au gland si le système de maintien de la lentille.

Le bon maintien de la lentille dépend principalement de la bonne adhérence à l'interface patin de maintien/surface convexe de la lentille.

Les revêtements anti-salissures, également dénommés "revêtements hydrophobes et/ou oléophobes" sont bien connus dans la technique. Ils sont généralement fabriqués à partir de fluorosilanes ou fluorosilazanes, c'est-à-dire des silanes ou des silazanes contenant des atomes de fluor.

Les revêtements anti-salissures les plus performants possèdent de faibles énergies de surface, typiquement des énergies de surface inférieures ou égales à 14 mJ/ m², de préférence inférieures ou égales à 12 mJ/m².

La conséquence de ces faibles énergies de surface est que la lentille peut se désaxer lors de l'étape de débordage.

Ce problème technique est connu.

Afin de remédier à celui-ci, il a été proposé de déposer des revêtements temporaires (ou surcouches temporaires) permettant d'éviter le désaxage lors du débordage, tout en préservant les propriétés du revêtement anti-salissures.

De telles techniques ont fait l'objet de nombreux brevets tels que les brevets EP1392613, WO2004110946, WO2008053020.

Après retrait de la surcouche, les propriétés de la couche hydrophobe, même si celles-ci sont globalement bien préservées peuvent être parfois inférieures à celles de la couche avant dépôt de la couche temporaire. En particulier, l'angle de contact peut être inférieur de quelques degrés par rapport à celui de la couche hydrophobe avant dépôt de la couche temporaire.

Par ailleurs, la durabilité (le maintien des propriétés hydrophobes du revêtement sous l'effet d'essuyages répétés) peut être affectée.

C'est un des buts de l'invention de fournir une lentille ophtalmique pour lunettes, comportant un revêtement antisalissure (top-coat) et une surcouche temporaire préalablement déposée sur le revêtement antisalissure, rendant la lentille apte au débordage et conduisant, après retrait de la couche temporaire, à une lentille ophtalmique à propriétés antisalissure améliorées par rapport aux lentilles ophtalmiques comportant une couche hydrophobe et une surcouche classique, telle qu'une surcouche de fluorure métallique.

Bien évidemment, cette amélioration doit s'effectuer sans nuire aux autres propriétés de la surcouche à savoir sa capacité à rendre apte au débordage la lentille ophtalmique et son retrait aisé, en particulier par essuyage à sec, au moyen d'un simple tissu d'entretien de lentilles, et/ou en présence d'un solvant approprié (alcool). Selon l'invention, en déposant successivement deux couches hydrophobes spécifiques avant de procéder au dépôt de la surcouche temporaire de fluorure métallique et en utilisant des épaisseurs précisément définies pour ces couches hydrophobes et pour la surcouche temporaire, on parvient à améliorer de façon importante les propriétés d'angle de contact et la durabilité de la couche hydrophobe après retrait de la surcouche, par rapport à des lentilles hydrophobes de l'état de l'art utilisant une couche hydrophobe et une surcouche classiques.

Ainsi, l'invention consiste en une lentille ophtalmique apte au débordage comprenant une surface principale avant et une surface principale arrière obtenue par dépôt successif dans cet ordre sur au moins une des surfaces principales de la lentille, préférentiellement la surface principale avant,
- d'au moins une première couche hydrophobe, d'une épaisseur physique de 6 à 16 nm obtenue par dépôt d'une composition comprenant un premier constituant A choisi parmi les composés fluorés, de préférence perfluorés, et mieux encore des polyéthers perfluorés, comportant au moins un groupe silanol ou un précurseur de groupe silanol et dont la masse molaire moyenne en nombre est supérieure ou égale à 2000 g/mol, préférentiellement de 2000 à 10000 g/mol;
- d'au moins une deuxième couche hydrophobe, d'une épaisseur physique de 3 à 20 nm, obtenue par dépôt d'une composition comprenant un second constituant B choisi parmi des composés fluorés, de préférence perfluorés, comportant au moins un groupe silanol ou un précurseur de celui-ci, et dont la masse molaire moyenne en nombre est inférieure ou égale à 900 g/mol;
- d'au moins une couche temporaire comprenant un fluorure métallique, d'une épaisseur physique de 22 à 50 nm;
- optionnellement d'une couche temporaire comprenant un oxyde ou un hydroxyde métallique ou de metalloïde. La lentille ophtalmique de l'invention est définie dans la revendication 1.

Dans la présente demande, un revêtement temporaire est un revêtement destiné à être éliminé/retiré après le débordage de la lentille ophtalmique.

Par face arrière (généralement concave) du substrat, on entend la face qui, lors de l'utilisation de l'article, est la plus proche de l'œil du porteur. Inversement, par face avant (généralement convexe) du substrat, on entend la face qui, lors de l'utilisation de l'article, est la plus éloignée de l'œil du porteur.

Les inventeurs ont constaté que les épaisseurs physiques de la première couche hydrophobe et de la couche de fluorure métallique étaient les paramètres les plus influents sur les performances finales de la couche antisalissure.

Des épaisseurs de 3 à 10 nm, mieux de 5 à 8 nm, pour la deuxième couche hydrophobe, sont toutefois particulièrement recommandées.

Les caractéristiques préférentielles non limitatives prises isolément ou en combinaison des lentilles ophtalmiques selon l'invention sont :
- l'épaisseur physique préférentielle de la première couche hydrophobe varie de 6 à 15 nm, et l'épaisseur physique de la couche comprenant un fluorure métallique varie de 24 à 40 nm.
- l'épaisseur physique de la première couche hydrophobe varie de 8 à 12 nm, et l'épaisseur physique de la couche comprenant un fluorure métallique varie de 25 à 38 nm.
- l'épaisseur physique de la première couche hydrophobe varie de 6 à 15 nm, et l'épaisseur physique de ladite couche comprenant un fluorure métallique varie de 24 à 40 nm.
- l'épaisseur physique de la première couche hydrophobe varie de 8 à 12 nm, mieux 8 à 11 nm, l'épaisseur physique de la deuxième couche hydrophobe varie de 5 à 8 nm et l'épaisseur physique de la couche comprenant un fluorure métallique varie de 25 à 38 nm, mieux de 28 à 33 nm.
- l'épaisseur totale des première et deuxième couches hydrophobes est supérieure ou égale à 13 nm.
- l'épaisseur totale des première et deuxième couches hydrophobe est supérieure ou égale à 15 nm, quand l'épaisseur de la couche comprenant un fluorure métallique est supérieure ou égale à 40 nm.
- une couche d'oxyde de magnésium est déposée sur la couche de fluorure métallique.

Les composés A et B sont choisis de façon à conférer des propriétés hydrophobes aux premières et deuxièmes couches.

Par couche à propriété hydrophobe (ou couche hydrophobe), on entend une couche dont la surface présente un angle de contact statique avec l'eau de 90° ou plus.

Le composé A est choisi préférentiellement parmi les composés conduisant à une première couche possédant une énergie de surface inférieure ou égale à 14 mJ/m², mieux inférieure ou égale à 12 mJ /m².

La première couche hydrophobe est obtenue par dépôt d'une composition comprenant de préférence au moins 40%, mieux au moins 50% en masse, mieux encore au moins 70% en masse et de façon optimale au moins 80% en masse de composé A.

Les énergies de surface sont calculées selon la méthode OWENS-WENDT décrite dans la référence : "Estimation of the surface force energy of polymers" OWENS D.K, WENDT R.G. (1969) J. APPL-POLYM-SCI, 13, 1741-1747.

L'angle de contact statique avec l'eau de la première couche hydrophobe est préférentiellement supérieur à 100°, mieux supérieur à 110° et mieux encore supérieur à 115°.

Le constituant A est choisi parmi des composés fluorés, de préférence perfluorés, comportant au moins un groupe silanol ou un précurseur de groupe silanol et dont la masse molaire moyenne en nombre est supérieure ou égale à 2000 g /mol, préférentiellement de 2000 à 10000 g/mol, mieux de 3000 à 6000 g/mol, et de façon optimale de 3000 à 5000 g/mol.

D'une manière générale, dans la présente demande, à la fois pour le constituant A et le constituant B, les groupes précurseurs de groupes silanols peuvent être représentés indépendamment les uns des autres par le groupe hydrolysable de formule-Si(X)ₙ, où n est un entier variant de 1 à 3 et où les groupes X représentent indépendamment des groupes précurseurs de groupes hydroxyle, c'est-à-dire des groupes hydrolysables.

Préférentiellement, X est un groupement alcoxy ou un groupement NH2 ou un atome de chlore, de préférence un groupe méthoxy ou éthoxy.

De préférence, une seule extrémité de chaine du composé A comprend un groupe silanol ou un précurseur de groupe silanol.

De préférence, le constituant A comprend au moins un composé choisi parmi les composés de formule : 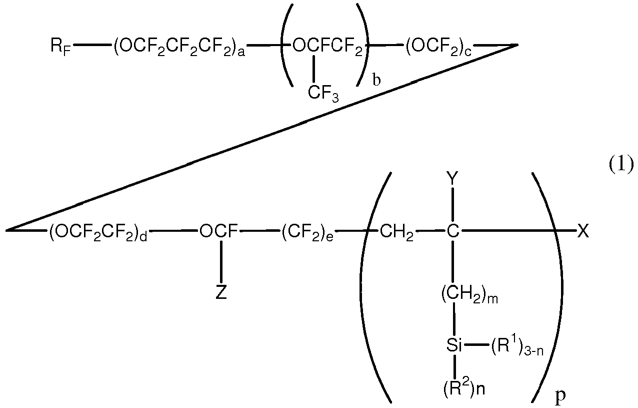 dans laquelle
- R_{F} représente un groupement perfluoroalkyle à chaîne droite ou ramifiée ayant 1 à 16 atomes de carbone,
- X est un atome d'iode, de brome ou d'hydrogène,
- Y est un atome d'hydrogène ou un groupe alkyle linéaire ou ramifié ayant 1 à 6 atomes de carbone,
- Z est un atome de fluor ou un groupe trifluorométhyle,
- R¹ est un groupe hydrolysable,
- R² est un atome d'hydrogène ou un groupe monovalent inactif,
- a, b, c et d sont des entiers de 0 à 200,
- e est 0 ou 1,
- m et n sont des entiers de 0 à 2, et
- p est un entier de 1 à 10,
- Rf, a, b, c, e, m, n et p sont choisis de façon à ce que la masse molaire moyenne du composé de formule (1) soit supérieure ou égale à 2000.

De préférence, la première couche hydrophobe est obtenue par dépôt d'une composition comprenant de 35 à 60 % en poids de composé de formule (1), mieux de 40 à 55% en poids de composé de formule (1).

Mieux encore, le constituant (1) est préférentiellement choisi parmi les composés de formule : 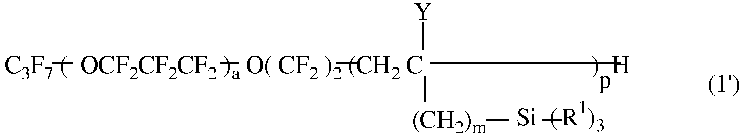 dans laquelle
- Y est un atome d'hydrogène ou un radical alkyle ayant 1 à 6 atomes de carbone,
- R¹ est un groupe hydrolysable,
- a est un entier de 10 à 50,
- m est un entier de 0 à 2, et
- p est un entier de 1 à 10.

Le constituant A particulièrement préféré comprend l'Optool DSX™ de la société Daikin ou l'AES 4, de cette même société.

Le constituant B est choisi parmi des composés fluorés, de préférence perfluorés, comportant au moins un groupe silanol ou un précurseur de celui-ci, et dont la masse molaire moyenne en nombre est inférieure ou égale à 900, de préférence de 300 à 800 et mieux encore de 400 à 600.

Le constituant B lorsqu'il est déposé en monocouche de 5 nm sur une surface de silice SiO₂ conduit généralement à une couche possédant une énergie de surface inférieure ou égale à 16 mJ/m², mieux inférieure ou égale à 15 mJ /m².et mieux encore inférieure ou égale à 14 mJ/m².

Le constituant B est généralement moins hydrophobe que la constituant A, c'est à dire que l'angle de contact statique avec l'eau d'une monocouche obtenue à partir du constituant A est inférieur à celui d'une monocouche obtenue à partir du constituant B.

De préférence, une seule extrémité de chaine du composé B comprend un groupe silanol ou un précurseur de groupe silanol.

Un constituant B préféré comprend un composé silazane de formule CF₃-(CF₂)₇-CH₂-CH₂-Si (NH₂)₃

Ce composé est disponible sous le nom d'OF110™ de la société Optron.

Un autre constituant B utilisable est le composé OF210™ de la même société.

Les première et deuxième couches hydrophobes peuvent être formées par toute technique bien connue telle que dépôt au trempé, dépôt par centrifugation, dépôt par pulvérisation et dépôt par évaporation. De préférence les couches hydrophobes sont formées par dépôt par évaporation sous vide. De préférence, les couches temporaires sont aussi formées par évaporation sous vide.

Dans ces opérations de dépôt, les constituants A et B peuvent être utilisés tels quels ou dilués avec un solvant approprié, ou encore incorporés dans un matériau fibreux ou poreux.

Parmi les solvants convenant pour la dilution des constituants A et B on peut citer les hydrocarbures aliphatiques fluoromodifiés (par ex. : le perfluoroheptane et le perfluorooctane), les hydrocarbures aromatiques fluoromodifiés (par ex. : l'hexafluorure de xylène et le trifluorure de benzène), les éthers fluoromodifiés (par ex. : le méthylperfluorobutyléther et le perfluoro(butyl)-2tétrahydrofurane), les alkylamines fluoromodifiées (par ex. : la perfluorotributylamine et la perfluorotripentylamine), les hydrocarbures (par ex. la benzine de pétrole, les essences minérales, le toluène et le xylène), les cétones (par ex. : l'acétone, la méthyléthylcétone et la méthylisobutylcétone).

La couche temporaire est une couche comprenant un fluorure ou un mélange de fluorures métalliques.

Comme exemple de fluorures métalliques, on peut citer le fluorure de magnésium MgF₂, de lanthane LaF₃, d'aluminium AlF₃ ou de cérium CeF₃. De préférence on utilisera le fluorure de magnésium.

Comme indiqué précédemment, l'épaisseur de la première couche de fluorure métallique varie de 22 à 50 nm, mieux de 24 à 40 nm et mieux encore de 25 à 38 nm.

Une couche optionnelle d'oxyde métallique et/ou d'hydroxyde métallique peut être déposée sur la lentille selon l'invention

La couche de MgO peut résulter de l'évaporation
- de granules de MgO, avec une granulométrie de 1 à 3 nm (ref : M-1131 de CERAC) ;
- de granules de MgO avec une granulométrie de 3 à 6 mm (réf : M-2013 d'UMICORE) ;
- de grains de MgO (ref : 0481263, commercialisé par UMICORE)
Mg(OH)₂ d'ALDRICH peut être déposé.

L'épaisseur de la couche d'oxyde métallique et/ou d'hydroxyde métallique ou de métalloïde est généralement faible, généralement inférieure à 10 nm et préférentiellement varie de 1 à 5 nm.

Dans une réalisation préférée de l'invention, la lentille ophtalmique comprend un revêtement antireflet interposé entre la surface principale du substrat et les couches selon l'invention, la première couche hydrophobe étant directement déposée sur la surface externe du revêtement antireflet. De préférence encore, la surface externe du revêtement antireflet est la surface externe d'une couche d'oxyde de silicium, de préférence une couche de SiO₂ ou comportant du SiO₂.

Dans une autre réalisation préférée, l'article d'optique comprend un revêtement anti-abrasion et/ou anti-rayure en dessous du revêtement antireflet et éventuellement un revêtement de primaire antichoc entre le revêtement anti-abrasion et/ou anti-rayure et le substrat. Dans la présente demande, le terme substrat optiquement transparent recouvre tout substrat classiquement utilisé dans le domaine de l'optique ophtalmique, que ce substrat soit nu ou revêtu d'un ou plusieurs revêtements fonctionnels classiques autres qu'un revêtement antisalissure. Par surface externe d'un revêtement ou d'une couche on entend la surface de revêtement ou de la couche la plus éloignée de la surface principale du substrat. De manière générale, le substrat de l'article d'optique selon l'invention peut être tout substrat, et de préférence un substrat en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les poly(thiouréthanes), les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Par (co)polymère, on entend un copolymère ou un polymère. Par (méth)acrylate, on entend un acrylate ou un méthacrylate.

Parmi les substrats préférés selon l'invention, on peut citer des substrats obtenus par polymérisation des (métha)crylates d'alkyle, en particulier des (méth)acrylates d'alkyle en C₁-C₄, tels que le (méth)acrylate de méthyle et le (méth)acrylate d'éthyle, des (méth)acrylates aromatiques polyéthoxylés tels que les di(méth)acrylates de bisphénols polyéthoxylés, des dérivés allyles tels que les allylcarbonates de polyols aliphatiques ou aromatiques, linéaires ou ramifiés, des thio(méth)acrylates, des épisulfures et de mélanges précurseurs polythiols/polyisocyanates (pour l'obtention de polythiouréthanes).

Par polycarbonate (PC), on entend au sens de la présente invention aussi bien les homopolycarbonates que les copolycarbonates et les copolycarbonates séquencés. Les polycarbonates sont disponibles dans le commerce, par exemple auprès des sociétés GENERAL ELECTRIC COMPANY sous la marque LEXAN®, TEIJIN sous la marque PANLITE®, BAYER sous la marque BAYBLEND®, MOBAY CHEMICHAL Corp. sous la marque MAKROLON® et DOW CHEMICAL Co. sous la marque CALIBRE®.

Après débordage de la lentille ophtalmique, le retrait de la surcouche temporaire et de l'éventuelle couche temporaire d'oxyde et/ou d'hydroxyde métallique ou de métalloïde peut s'effectuer par tout moyen approprié, par exemple en milieu liquide et/ou par action mécanique, préférentiellement par essuyage à sec, au moyen d'un simple tissu d'entretien de lentilles, et/ou en présence d'un solvant approprié (alcool).

L'invention concerne également les lentilles ophtalmiques obtenues après retrait de la couche de fluorure métallique et, lorsqu'elle est présente, de la couche comprenant un oxyde et/ou un hydroxyde métallique ou de métalloïde, qui présentent préférentiellement un angle de contact statique avec l'eau de 117° ou plus.

Les exemples suivants illustrent la présente invention de façon non limitative. Dans les exemples, sauf indication contraire, tous les pourcentages et parties sont exprimés en poids. Les épaisseurs, notamment les épaisseurs de couche hydrophobe sont des épaisseurs physiques.

### EXEMPLES

Le dépôt s'effectue dans une machine de dépôt sous vide BAK760 de la société Balzers, équipée d'un canon à ions, un canon à électrons, un évaporateur thermique à effet joule.

Les lentilles ophtalmiques sont des lentilles Orma® ayant une puissance de -2,00 dioptries et une épaisseur centre de 2,1 mm.

Chaque lentille ophtalmique comprend un revêtement anti-abrasion tel que décrit dans l'exemple 3 du brevet EP614957 et un revêtement antireflet multicouche ZrO₂/SiO₂/ZrO₂/ITO(indium tin oxide)/SiO₂.

.Selon les procédures générales décrites ci-dessous, on dépose directement sur la dernière couche de silice du revêtement antireflet une couche d'Optool DSX™ (fournisseur : société Daikin) puis une couche d'OF210 ™ (fournisseur : société Optron), puis les couches de MgF₂ et de MgO sont déposés sous vide secondaire (< 10⁻³mbar).

### 1. Dépôt de la première couche hydrophobe (Top Coat DSX ™).

Le Top Coat déposé dans une capsule de cuivre est évaporé par effet Joule. Le dépôt est effectué à une vitesse de dépôt inférieure à 0.33nm/s.

### 2. Dépôt de la seconde couche hydrophobe (OF210 ™).

Cette couche est déposée par évaporation à l'aide du canon à électrons.

On utilise une capsule de cuivre comprenant de la paille de fer imprégnée d'OF210™ fournie par la société Optron. La capsule d'OF210™ est placée dans une cavité du creuset. Sur cette capsule on vient placer un couvercle percé obtenu auprès de la société Satis. Le couvercle est chauffé par le flux d'électrons qui lui-même chauffe la capsule de cuivre par conduction thermique. La température augmente au sein du « four » ainsi créé, jusqu'à obtenir l'évaporation de l'OF210.

La vitesse de dépôt est inférieure à 0.2 nm/s.

### 3. Dépôt des couches de MgF₂ et de MgO :

Ces matériaux sont évaporés au canon à électrons.

3.1 -Dépôt de la couche de MgF₂,

Le matériau évaporé est un composé de formule MgF₂, de granulométrie 1-2,5 nm, commercialisé par la Société MERCK. Pour le MgF₂ on a régulé la vitesse de dépôt autour de 0.75 nm/s.

3.2 -On procède alors au dépôt par évaporation de MgO directement sur la couche de MgF₂.

On évapore sous vide, au moyen d'un canon à électrons, une couche de MgO (à partir de pastilles de MgO (référence 0481263) de la société UMICORE), d'épaisseur égale à 2 nm, directement sur la couche de MgF₂.

Des lentilles sont fabriquées selon le procédé général tel que décrit ci-dessus, en faisant varier les épaisseurs d'Optool DSX™, d'OF210™, de MgF2 (L'épaisseur de MgO restant fixée à 2 nm).

Des lentilles correspondant à des exemples comparatifs (avec des épaisseurs différentes de celle de la présente invention) sont également fabriquées, ainsi que des lentilles sans deuxième couche hydrophobe (sans OF210™), comme exemple de l'art antérieur.

Ces lentilles sont ensuite soumises à des tests de déglantage, d'enlèvement de la surcouche et de mesures d'angles de contact.

L'ensemble des résultats obtenus sont récapitulés dans le tableau 2.

### Mesure des épaisseurs des couches déposées.

Il existe une différence entre les valeurs des épaisseurs programmées sur le dispositif d'évaporation et celles effectivement déposées. On détermine donc les conditions d'évaporation qu'il convient d'appliquer pour le dépôt des épaisseurs physiques requises pour des monocouches hydrophobes, des monocouches de fluorures métalliques et des monocouches d'oxyde ou d'hydroxyde métalliques ou de métalloïde.

Les épaisseurs sont mesurées grâce à un ellipsomètre

### Technique utilisant un spectro- ellipsomètre Woollam VB-400 VASE.

La technique est décrite pour une couche hydrophobe, mais s'applique à tout type de couche de fine épaisseur, préférentiellement inférieure ou égale à 25-30 nm et mieux (< ∼10-15 nm). On dépose la monocouche hydrophobe sur un disque de silicium, sur lequel on a effectué un pré-traitement de bombardement ionique IPC (Ion pre-clearing) (60 secondes 1A - 100V) On mesure les épaisseurs déposées sur les disques de silicium.

L'indice des couches hydrophobe est de l'ordre de 1, 36.

On considère que les couches se déposent sur un oxyde natif SiO₂ de 2 nm et on utilise un modèle de Cauchy pour l'indice de réfraction de la couche n=a+b/λ+c/λ². Pour une longueur d'onde λ. Typiquement a=1,36 ; b=0,003 et c=0 pour les couches fluorées hydrophobes. La méthode consiste ensuite à mesurer ψ et Δ à 75° d'incidence entre 300 et 800nm et à effectuer un ajustement informatique des valeurs (angle d'incidence et épaisseur de la couche) pour obtenir une bonne cohérence (les courbes se superposent au mieux) entre la simulation théorique et la mesure réelle de l'échantillon en utilisant Tan (ψ) et cos (Δ). La mesure d'épaisseur est confirmée si la valeur de l'angle obtenue lors de l'ajustement est proche de 75° (75°+/-0.5°).

Le procédé est utilisable pour la mesure d'épaisseur d'autres couches, en particulier la couche de MgO, en remplaçant la valeur de a par celle correspondant au matériau et connue de l'homme du métier.

Pour les couches d'épaisseur plus importante, en particulier de MgF₂, on effectue une mesure classique d'épaisseur à l'ellipsomètre Woolam VB-400 VASE (mesure à 3 angles d'incidence 65°, 70° et 75°).

L'ajustement est effectué en faisant varier les paramètres de Cauchy et l'épaisseur. On donne un point de départ pour le calcul a (dépendant du matériau), b=0,003 et c=0 et une valeur estimée de l'épaisseur (typiquement a=1,38 pour MgF₂).

### Test de déalantaae (ou débordage)

Ce test permet de noter l'aptitude des lentilles ophtalmiques à passer avec succès un test de débordage.

Description du test :
1) collage du pad (patin) adhésif 3M (adhésif double face) (PAD 3M / Essilor diamètre 24 mm réf GAM200) sur le bloc de meulage (gland) (bloc/gland de diamètre 24 mm réf GAM202) en respectant le centrage du pad sur le bloc.
2) retrait du film protecteur du pad en prenant soin de ne pas toucher l'adhésif : 3) collage de l'ensemble bloc+pad au centre de la surface convexe de la lentille testée :
   Retourner le verre : une couronne d'adhérence continue en périphérie du pad doit être obtenue. L'existence de cette couronne garantit le collage efficace du pad sur la lentille.

On effectue ensuite un certain nombre de sollicitations :

**Tableau 1**

| Sollicitations | **Note** |
|---|---|
| Le bloc tombe sous son propre poids, sans aucune sollicitation. | **0** |
| Le bloc se décolle sous l'effet d'une sollicitation manuelle (force) exercée latéralement par l'index sur le gland, le point d'appui étant le pouce appliqué sur la tranche de la lentille. La force s'exerçant latéralement, c'est-à-dire perpendiculairement à l'axe de la lentille. | **Note comprise entre 0.25 et 3** |
| | **0.25** : le bloc se décolle dès la 1^{ère} |
| | **1** : le bloc se décolle à la 2^{ème} |
| Lors de l'opération ci-dessus, la lentille est immobile pendant le test. | **2** : le bloc se décolle à la 3^{ème} |
| On tourne le verre d'un quart de tour entre chaque sollicitation (4 maximum) | **3** : le bloc se décolle à la 4^{ème} |
| Vérification de la couronne d'adhésion. S'il y a eu dégradation donnant lieu à une retouche | **-0.25** sur la note finale |
| | **Note comprise entre 3 et 4** |
| La sollicitation s'effectue manuellement au moyen d'une pince qui permet d'exercer une force dans l'axe optique de la lentille, c'est-à-dire perpendiculairement à la lentille et dans une direction opposée à celle-ci. Le bloc ou gland se décolle lors de sollicitations perpendiculaires avec de la pince à déglanter | **3.25** : le bloc se décolle dès la 1^{ère} |
| | **3.5** : le bloc se décolle à la 2^{ème} |
| | **3.75** : le bloc se décolle à la 3^{ème} |
| | **4 :** le bloc se décolle à la 4^{ème} |
| Vérification de la couronne d'adhésion. S'il y a eu dégradation donnant lieu à une retouche : | **-0.25** sur la note finale |
| Le bloc se décolle lors de sollicitations manuelles circulaires (en torsion) avec la pince à déglanter. | **Note comprise entre 4 et 5** |
| | **4.5** : le bloc se décolle facilement |
| | **5** : le bloc se décolle difficilement |

Les sollicitations sont progressives et doivent toujours être effectuées dans cet ordre.

On obtient la note finale après les différentes sollicitations et le retrait des éventuels « 0.25 de malus ».

A titre de référence, la lentille commerciale Essilor Crizal ® Alizé ® comportant une surcouche pour faciliter le débordage obtient une note de 5/5 au test ci-dessus.

Une fois la notation obtenue, on procède à une nouvelle numérotation par gamme de résultats :
5 : :+++
4 à moins de 5 : ++
3 à moins de 4 : +
2 à moins de 3 : -
Inférieur à 2 : X(échec)

### Test de facilité d'enlèvement de la surcouche :

Notes de 1 (très difficile) à 5 (facile).

La lentille avec surcouche est maintenue sur sa tranche entre le pouce et l'index d'une main et on vient essuyer la surface de la lentille avec un tissu Selwith™ sec, en appuyant avec le pouce de l'autre main. (1 essuyage correspond à un passage).

Après chaque passage, on regarde visuellement en réflexion sous un éclairage de type néon, la couleur du reflet.

Lorsque le reflet est de couleur verte, la surcouche a été retirée.

Lorsque le reflet reste de couleur bleue, la surcouche est toujours présente ou partiellement présente.

On note le nombre de passage nécessaire pour que la surcouche soit retirée et on attribue une première note..
1: très difficile (5 passages ou plus)
2: 4 passages
3: 3 passages (plus difficile que sur Crizal® Alizé®)
4: 2 passages (un peu plus difficile que Azur)
5: 1 passage (la lentille commerciale Crizal® Alizé® correspond à ce niveau.

Puis on procède à une nouvelle numérotation (par catégorie)

Facilité d'enlèvement
5 :+++
4 à moins de 5 : ++
3 à moins de 4 : +
<3 : X(échec)

### Mesure d'angle de contact statique avec l'eau :

L'angle de contact statique avec l'eau est mesuré après retrait des couches temporaires (MgF₂/ MgO).

La mesure est effectuée par acquisition automatique et par analyse d'images de l'angle de contact d'une goutte d'eau déposée à la surface d'un verre plan ou courbe dans le but d'évaluer les performances hydrophobes d'un traitement.

La mesure est effectuée sur un appareil DSA100 (Drop Shape Analysis System) Kruss relié à un PC sous Windows.

Le volume de la goutte formée est de 4 microlitres.

La conductivité de l'eau est comprise entre 0,3 µS et 1 µS à 25°C.

La température de la pièce est maintenue à 23+/- 5°C.

Les résultats sont récapitulés dans le tableau 2 ci-dessous.

**Tableau 2**

| | DSX™ (Epaisseur en nm) | OF210™ (Epaisseur en nm) | MgF2 (Epaisseur en nm) | Angle de contact statique avec l'eau(°) | Note déglantage | Facilité d'enlèvement |
|---|---|---|---|---|---|---|
| Exemple | | | | | | |
| Ex1 | 9,6 | 5,2 | 35,7 | 118,7 | +++ | + |
| Ex2 | 9,6 | 7,8 | 35,7 | 117,4 | +++ | + |
| Ex3 | 6,2 | 6,5 | 35,7 | 117,2 | ++ | + |
| Ex4 | 9,6 | 7,1 | 32,9 | 118,4 | ++ | + |
| Ex5 | 9,6 | 6,5 | 35,7 | 118,1 | ++ | + |
| Ex6 | 13,1 | 6,5 | 35,7 | 117,2 | ++ | + |
| Ex7 | 11 | 6,2 | 32,9 | 117,2 | + | ++ |
| Ex8 | 8,3 | 6,2 | 32,9 | 118 | + | + |
| | | | | | | |
| Comp1 | 13,1 | 5,2 | 52,5 | 118,1 | ++ | **X** |
| Comp 2 | 13,1 | 7,8 | 52,5 | 117,6 | + | **X** |
| Comp 3 | 13,1 | 7,8 | 18,9 | 118,6 | **X** | +++ |
| Comp 4 | 9,6 | 6,5 | 52,5 | 117,6 | - | **X** |
| Comp 5 | 9,6 | 0 | 38,7 | **113,5** | + | X |
| Comp 6 | 9 ,6 | 0 | 18,9 | **114,1** | ++ | ++ |

| | | | | | | |
|---|---|---|---|---|---|---|
| Comp : comparatif | | | | | | |

Les exemples selon l'invention permettent d'obtenir une note + au test de déglantage, ainsi qu'une note de + à ++ au test de facilité d'enlèvement, tout en obtenant un angle de contact statique avec l'eau, mesuré après retrait de la couche temporaire, d'au moins 117°.

Cette valeur d'angle de contact représente une amélioration importante par rapport à des angles de contact obtenus à partir d'une couche d'Optool DSX™ exemples comparatifs 5 et 6.

On constate au vu de l'exemple comparatif 3, qu'une épaisseur de MgF2 de 18, 9 nm conduit à un échec au test de déglantage.et qu'une augmentation à 52, 5 nm de l'épaisseur de la couche de MgF₂ (Exemple comparatif 4), de façon surprenante, ne permet pas d'obtenir à la fois le niveau requis d'adhérence et de facilité d'essuyage, cette dernière propriété est très importante pour l'utilisateur final.

Il apparaît que les effets de l'invention sont obtenus à des valeurs spécifiques d'épaisseurs d'Optool DSX™, d'OF210™ et de MgF₂.

## Revendications

1. Lentille ophtalmique apte au débordage comprenant une face principale avant et une face principale arrière, **caractérisée en ce qu'**elle a été obtenue par dépôt successif dans cet ordre sur au moins une des faces principales de la lentille, préférentiellement la face principale avant,
- d'au moins une première couche hydrophobe, d'une épaisseur physique de 6 à 16 nm, obtenue par dépôt d'une composition comprenant un constituant A choisi parmi les composés fluorés, comportant au moins un groupe silanol ou un précurseur de groupe silanol et dont la masse molaire moyenne en nombre est supérieure ou égale à 2000 g/mol,
- d'au moins une deuxième couche hydrophobe, d'une épaisseur physique allant de 3 à 20 nm, obtenue par dépôt d'une composition comprenant un constituant B choisi parmi les composés fluorés, comportant au moins un groupe silanol ou un précurseur de celui-ci, et dont la masse molaire moyenne en nombre est inférieure ou égale à 900 g/mol;
- d'au moins une couche temporaire comprenant un fluorure métallique, d'une épaisseur physique de 22 à 50 nm;
- optionnellement d'une couche temporaire comprenant un oxyde et/ou un hydroxyde métallique ou de métalloïde.

2. Lentille ophtalmique selon la revendication 1, **caractérisée en ce que** l'épaisseur physique de la deuxième couche hydrophobe varie de 3 à 10 nm.

3. Lentille ophtalmique selon la revendication 2, **caractérisée en ce que** l'épaisseur physique de la deuxième couche hydrophobe varie de 5 à 8 nm.

4. Lentille ophtalmique selon l'une quelconque des revendication précédentes, **caractérisée en ce que** l'épaisseur physique de ladite première couche hydrophobe varie de 6 à 15 nm, et l'épaisseur physique de ladite couche comprenant un fluorure métallique varie de 24 à 40 nm.

5. Lentille ophtalmique selon l'une quelconque des revendications précédentes, **caractérisée en ce que** l'épaisseur physique de ladite première couche hydrophobe varie de 8 à 12 nm, et l'épaisseur physique de ladite couche comprenant un fluorure métallique varie de 25 à 38 nm.

6. Lentille ophtalmique selon l'une quelconque des revendications précédentes, **caractérisée en ce que** l'épaisseur totale de la première couche hydrophobe et de la deuxième couche hydrophobe est supérieure ou égale à 13 nm.

7. Lentille ophtalmique selon l'une quelconque des revendications précédentes, **caractérisée en ce que** l'épaisseur totale de la première couche hydrophobe et de la deuxième couche hydrophobe est supérieure ou égale à 15 nm, quand l'épaisseur de la couche temporaire comprenant un fluorure métallique est supérieure ou égale à 40 nm.

8. Lentille ophtalmique selon l'une quelconque des revendications précédentes, **caractérisée en ce que** le fluorure métallique est un fluorure de magnésium.

9. Lentille ophtalmique selon l'une quelconque des revendications précédentes, **caractérisée en ce qu'**elle comprend en outre une couche comprenant un oxyde et/ou un hydroxyde métallique ou de métalloïde déposée sur ladite couche comprenant un fluorure métallique et **en ce que** ledit oxyde et/ou hydroxyde métallique ou de métalloïde est l'oxyde de magnésium.

10. Lentille ophtalmique selon l'une quelconque des revendications précédentes **caractérisée en ce que** le constituant A possède une masse molaire moyenne en nombre de 3000 à 6000 g/mol, mieux 3000 à 5000 g/mol.

11. Lentille ophtalmique selon l'une quelconque des revendications précédentes, **caractérisée en ce que** le constituant B possède une masse molaire moyenne en nombre de 300 à 800 g/mol, mieux de 400 à 600 g/mol.

12. Lentille ophtalmique selon l'une quelconque des revendications précédentes **caractérisée en ce qu'**une seule extrémité de chaine du composé A comprend un groupe silanol ou un précurseur de groupe silanol.

13. Lentille ophtalmique selon l'une quelconque des revendications précédentes, **caractérisée en ce qu'**une seule extrémité de chaine du composé B comprend un groupe silanol ou un précurseur de groupe silanol.

14. Lentille ophtalmique selon l'une quelconque des revendications précédentes, **caractérisé en ce que** le constituant A comprend un composé de formule : 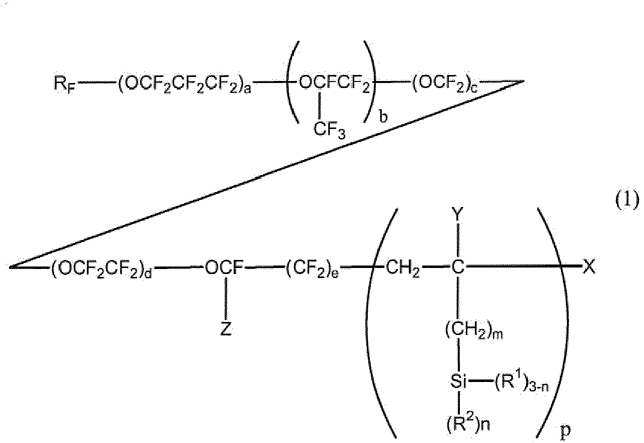 dans laquelle
- R_{F} représente un groupement perfluoroalkyle à chaîne droite ou ramifiée ayant 1 à 16 atomes de carbone,
- X est un atome d'iode, de brome ou d'hydrogène,
- Y est un atome d'hydrogène ou un groupe alkyle linéaire ou ramifié ayant 1 à 6 atomes de carbone,
- Z est un atome de fluor ou un groupe trifluorométhyle,
- R¹ est un groupe hydrolysable,
- R² est un atome d'hydrogène ou un groupe monovalent inactif,
- a, b, c et d sont des entiers de 0 à 200,
- e est 0 ou 1,
- m et n sont des entiers de 0 à 2, et
- p est un entier de 1 à 10.
- Rf, a, b, c, e, m, n et p sont choisis de façon à ce que la masse molaire moyenne du composé de formule (1) soit supérieure ou égale à 2000 g/mol.

15. Lentille ophtalmique selon l'une quelconque des revendications précédentes, **caractérisée en ce que** la première couche hydrophobe est obtenue par dépôt d'une composition comprenant au moins 40%, mieux au moins 50% en masse, mieux encore au moins 70%, et de façon optimale au moins 80% en masse de composé A.

16. Lentille ophtalmique selon l'une quelconque des revendications 14 ou 15, **caractérisée en ce que** la première couche hydrophobe est obtenue par dépôt d'une composition comprenant de 35 à 60 % en poids de composé de formule (1), mieux de 40 à 55% en poids de composé de formule (1).

17. Lentille ophtalmique selon l'une quelconque des revendications précédentes, **caractérisée en ce que** les deux couches hydrophobes sont déposées par évaporation.

18. Lentille ophtalmique selon l'une quelconque des revendications précédentes, **caractérisée en ce que** la masse molaire moyenne en nombre du constituant A varie de 2000 à 10000 g/mol.

19. Lentille ophtalmique obtenue par la mise en œuvre d'au moins les étapes suivantes :
1) obtenir une lentille ophtalmique selon l'une quelconque des revendications précédentes;
2) retirer la couche comprenant un fluorure métallique et la couche comprenant un oxyde métallique ou de métalloïde et/ou un hydroxyde métallique ou de métalloïde, si ladite couche comprenant un oxyde métallique ou de métalloïde et/ou un hydroxyde métallique ou de métalloïde est présente sur la lentille ophtalmique,
la lentille obtenue présentant un angle de contact statique avec l'eau de 117° ou plus.

## Patentansprüche

1. Augenlinse, die sich zur Randbearbeitung eignet, wobei sie eine vordere Hauptseite und eine hintere Hauptseite umfasst, **dadurch gekennzeichnet, dass** sie erhalten wurde, indem auf mindestens einer der Hauptseiten der Linse, vorzugsweise der vorderen Hauptseite, nacheinander Folgendes in dieser Reihenfolge aufgebracht wurde
- mindestens eine erste hydrophobe Schicht, mit einer physikalischen Dicke von 6 bis 16 nm, wobei sie erhalten wurde, indem eine Zusammensetzung aufgebracht wird, die einen Bestandteil A umfasst, welcher aus den fluorierten Verbindungen ausgewählt ist, die mindestens eine Silanolgruppe oder eine Silanolgruppenvorstufe aufweisen und deren Zahlenmittel des Molekulargewichts mindestens 2.000 g/mol beträgt,
- mindestens eine zweite hydrophobe Schicht, mit einer physikalischen Dicke von 3 bis 20 nm, wobei sie erhalten wurde, indem eine Zusammensetzung aufgebracht wird, die einen Bestandteil B umfasst, welcher aus den fluorierten Verbindungen ausgewählt ist, die mindestens eine Silanolgruppe oder eine Vorstufe einer solchen aufweisen und deren Zahlenmittel des Molekulargewichts höchstens 900 g/mol beträgt,
- mindestens eine vorübergehend bestehende Schicht, die ein Metallfluorid umfasst, mit einer physikalischen Dicke von 22 bis 50 nm;
- möglicherweise eine vorübergehend bestehende Schicht, die ein Oxid und/oder ein Hydroxid eines Metalls oder Halbmetalls umfasst.

2. Augenlinse nach Anspruch 1, **dadurch gekennzeichnet, dass** die physikalische Dicke der zweiten hydrophoben Schicht im Bereich von 3 bis 10 nm liegt.

3. Augenlinse nach Anspruch 2, **dadurch gekennzeichnet, dass** die physikalische Dicke der zweiten hydrophoben Schicht im Bereich von 5 bis 8 nm liegt.

4. Augenlinse nach einem beliebigen der vorhergehenden Ansprüche, **dadurch gekennzeichnet, dass** die physikalische Dicke der ersten hydrophoben Schicht im Bereich von 6 bis 15 nm liegt und die physikalische Dicke der Schicht, welche ein Metallfluorid umfasst, im Bereich von 24 bis 40 nm liegt.

5. Augenlinse nach einem beliebigen der vorhergehenden Ansprüche, **dadurch gekennzeichnet, dass** die physikalische Dicke der ersten hydrophoben Schicht im Bereich von 8 bis 12 nm liegt und die physikalische Dicke der Schicht, welche ein Metallfluorid umfasst, im Bereich von 25 bis 38 nm liegt.

6. Augenlinse nach einem beliebigen der vorhergehenden Ansprüche, **dadurch gekennzeichnet, dass** die Gesamtdicke der ersten hydrophoben Schicht und der zweiten hydrophoben Schicht mindestens 13 nm beträgt.

7. Augenlinse nach einem beliebigen der vorhergehenden Ansprüche, **dadurch gekennzeichnet, dass** die Gesamtdicke der ersten hydrophoben Schicht und der zweiten hydrophoben Schicht mindestens 15 nm beträgt, wenn die Dicke der vorübergehend bestehenden Schicht, welche ein Metallfluorid umfasst, mindestens 40 nm beträgt.

8. Augenlinse nach einem beliebigen der vorhergehenden Ansprüche, **dadurch gekennzeichnet, dass** es sich bei dem Metallfluorid um Magnesiumfluorid handelt.

9. Augenlinse nach einem beliebigen der vorhergehenden Ansprüche, **dadurch gekennzeichnet, dass** sie darüber hinaus eine Schicht umfasst, die ein Oxid und/oder ein Hydroxid eines Metalls und eines Halbmetalls umfasst, wobei sie auf die Schicht aufgebracht wird, welche ein Metallfluorid umfasst, und dadurch, dass es sich dem Oxid und/oder Hydroxid eines Metalls oder Halbmetalls um Magnesiumoxid handelt.

10. Augenlinse nach einem beliebigen der vorhergehenden Ansprüche, **dadurch gekennzeichnet, dass** der Bestandteil A ein Zahlenmittel des Molekulargewichts von 3.000 bis 6.000 g/mol, besser 3.000 bis 5.000 g/mol, besitzt.

11. Augenlinse nach einem beliebigen der vorhergehenden Ansprüche, **dadurch gekennzeichnet, dass** der Bestandteil B ein Zahlenmittel des Molekulargewichts von 300 bis 800 g/mol, besser von 400 bis 600 g/mol, besitzt.

12. Augenlinse nach einem beliebigen der vorhergehenden Ansprüche, **dadurch gekennzeichnet, dass** nur ein Kettenende der Verbindung A eine Silanolgruppe oder eine Silanolgruppenvorstufe umfasst.

13. Augenlinse nach einem beliebigen der vorhergehenden Ansprüche, **dadurch gekennzeichnet, dass** nur ein Kettenende der Verbindung B eine Silanolgruppe oder eine Silanolgruppenvorstufe umfasst.

14. Augenlinse nach einem beliebigen der vorhergehenden Ansprüche, **dadurch gekennzeichnet, dass** der Bestandteil A eine Verbindung der folgenden Formel umfasst: 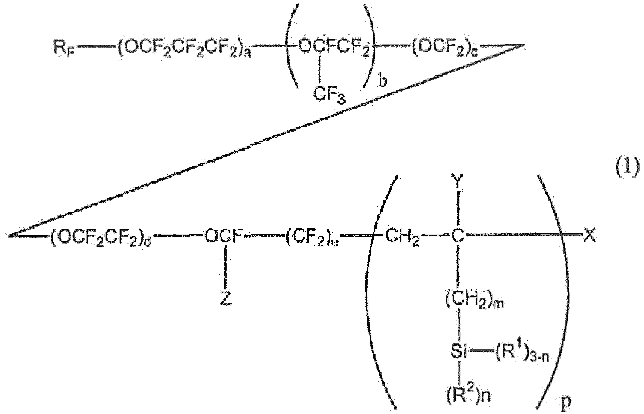 wobei
- R_{F} für eine geradkettige oder verzweigte Perfluoralkylgruppe mit 1 bis 16 Kohlenstoffatomen steht,
- X für ein Iod-, Brom- oder Wasserstoffatom steht,
- Y für ein Wasserstoffatom oder eine geradkettige oder verzweigte Alkylgruppe mit 1 bis 6 Kohlenstoffatomen steht,
- Z für ein Fluoratom oder eine Trifluormethylgruppe steht,
- R¹ für eine hydrolysierbare Gruppe steht,
- R² für ein Wasserstoffatom oder eine inaktive einbindige Gruppe steht,
- a, b, c und d ganze Zahlen von 0 bis 200 sind,
- e gleich 0 oder 1 ist,
- m und n ganze Zahlen von 0 bis 2 sind, und
- p eine ganze Zahl von 1 bis 10 ist,
- Rf, a, b, c, e, m, n und p derart ausgewählt sind, dass das mittlere Molekulargewicht der Verbindung der Formel (1) mindestens 2.000 g/mol beträgt.

15. Augenlinse nach einem beliebigen der vorhergehenden Ansprüche, **dadurch gekennzeichnet, dass** die erste hydrophobe Schicht erhalten wird, indem eine Zusammensetzung aufgebracht wird, die mindestens 40 %, besser mindestens 50 % nach Masse, noch besser mindestens 70 % und optimalerweise mindestens 80 % nach Masse an Verbindung A umfasst.

16. Augenlinse nach einem beliebigen der Ansprüche 14 oder 15, **dadurch gekennzeichnet, dass** die erste hydrophobe Schicht erhalten wird, indem eine Zusammensetzung aufgebracht wird, die 35 bis 60 Gewichts-% an der Verbindung der Formel (1), besser 40 bis 55 Gewicht-% an der Verbindung (1), umfasst.

17. Augenlinse nach einem beliebigen der vorhergehenden Ansprüche, **dadurch gekennzeichnet, dass** die beiden hydrophoben Schichten mittels Verdampfung aufgebracht werden.

18. Augenlinse nach einem beliebigen der vorhergehenden Ansprüche, **dadurch gekennzeichnet, dass** das Zahlenmittel des Molekulargewichts des Bestandteils A im Bereich von 2.000 bis 10.000 g/mol liegt.

19. Augenlinse, die erhalten wird, indem mindestens zumindest die folgenden Schritte durchgeführt werden:
1) Erhalten einer Augenlinse nach einem beliebigen der vorhergehenden Ansprüche;
2) Entfernen der Schicht, welche ein Metallfluorid umfasst, und der Schicht, welche ein Oxid eines Metalls oder eines Halbmetalls und/oder ein Hydroxid eines Metalls oder eines Halbmetalls umfasst, sofern diese Schicht, welche ein Oxid eines Metalls oder eines Halbmetalls und/oder ein Hydroxid eines Metalls oder eines Halbmetalls umfasst, auf der Augenlinse vorliegt,
wobei die erhaltene Linse einen statischen Kontaktwinkel mit Wasser aufweist, der 117° oder mehr beträgt.

## Claims

1. An ophthalmic lens fit for edging, comprising a front main face and a back main face, **characterized in that** it is obtained by depositing in succession in this order on at least one of the main faces of the lens and preferably the front main face:
- at least one first hydrophobic layer, of a physical thickness of 6 to 16 nm, obtained by depositing a composition comprising a constituent A chosen from fluorinated compounds, containing at least one silanol group or a silanol-group precursor, and the number average molar mass of which is higher than or equal to 2000 g/mol;
- at least one second hydrophobic layer, of a physical thickness ranging from 3 to 20 nm, obtained by depositing a composition comprising a constituent B chosen from fluorinated compounds, containing at least one silanol group or a precursor thereof and the number average molar mass of which is lower than or equal to 900 g/mol;
- at least one temporary layer comprising a metal fluoride, of a physical thickness of 22 to 50 nm; and
- optionally a temporary layer comprising a metalloid or metal hydroxide and/or oxide.

2. The ophthalmic lens as claimed in claim 1, **characterized in that** the physical thickness of the second hydrophobic layer is from 3 to 10 nm.

3. The ophthalmic lens as claimed in claim 2, **characterized in that** the physical thickness of the second hydrophobic layer is from 5 to 8 nm.

4. The ophthalmic lens as claimed in any one of the preceding claims, **characterized in that** the physical thickness of said first hydrophobic layer is from 6 to 15 nm, and the physical thickness of said layer comprising a metal fluoride is from 24 to 40 nm.

5. The ophthalmic lens as claimed in any one of the preceding claims, **characterized in that** the physical thickness of said first hydrophobic layer is from 8 to 12 nm, and the physical thickness of said layer comprising a metal fluoride is from 25 to 38 nm.

6. The ophthalmic lens as claimed in any one of the preceding claims, **characterized in that** the total thickness of the first hydrophobic layer and the second hydrophobic layer is larger than or equal to 13 nm.

7. The ophthalmic lens as claimed in any one of the preceding claims, **characterized in that** the total thickness of the first hydrophobic layer and the second hydrophobic layer is larger than or equal to 15 nm when the thickness of the temporary layer comprising a metal fluoride is larger than or equal to 40 nm.

8. The ophthalmic lens as claimed in any one of the preceding claims, **characterized in that** the metal fluoride is a magnesium fluoride.

9. The ophthalmic lens as claimed in any one of the preceding claims, **characterized in that** it furthermore comprises a layer comprising a metalloid or metal hydroxide and/or oxide deposited on said layer comprising a metal fluoride and **in that** said metalloid or metal hydroxide and/or oxide is magnesium oxide.

10. The ophthalmic lens as claimed in any one of the preceding claims, **characterized in that** the constituent A possesses a number average molar mass from 3000 to 6000 g/mol and better still from 3000 to 5000 g/mol.

11. The ophthalmic lens as claimed in any one of the preceding claims, **characterized in that** the constituent B possesses a number average molar mass from 300 to 800 g/mol and better still from 400 to 600 g/mol.

12. The ophthalmic lens as claimed in any one of the preceding claims, **characterized in that** only one chain end of the compound A comprises a silanol group or a silanol-group precursor.

13. The ophthalmic lens as claimed in any one of the preceding claims, **characterized in that** only one chain end of the compound B comprises a silanol group or a silanol-group precursor.

14. The ophthalmic lens as claimed in any one of the preceding claims, **characterized in that** the constituent A comprises a compound of formula: 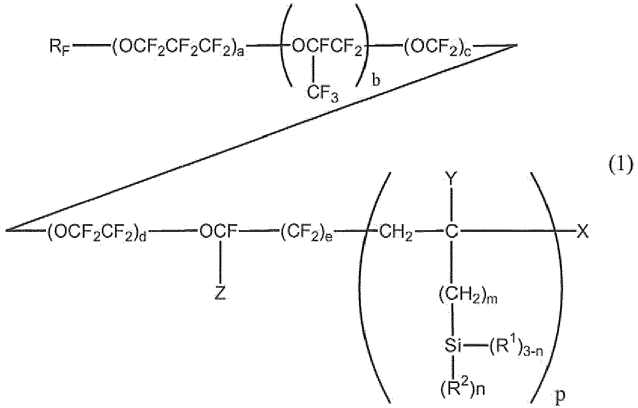 in which
- R_{F} represents a straight or branched perfluoroalkyl chain group containing 1 to 16 carbon atoms;
- X is a hydrogen, bromine or iodine atom;
- Y is a hydrogen atom or a linear or branched alkyl group containing 1 to 6 carbon atoms;
- Z is a fluorine atom or a trifluoromethyl group;
- R¹ is a hydrolysable group;
- R² is a hydrogen atom or an inactive monovalent group;
- a, b, c and d are integers from 0 to 200;
- e is 0 or 1;
- m and n are integers from 0 to 2; and
- p is an integer from 1 to 10.
- Rf, a, b, c, e, m, n and p are chosen so that the average molar mass of the compound of formula (1) is higher than or equal to 2000 g/mol.

15. The ophthalmic lens as claimed in any one of the preceding claims, **characterized in that** the first hydrophobic layer is obtained by depositing a composition comprising at least 40 wt%, better still at least 50 wt%, even better still at least 70 wt% and optimally at least 80 wt% of compound A.

16. The ophthalmic lens as claimed in either one of claims 14 and 15, **characterized in that** the first hydrophobic layer is obtained by depositing a composition comprising from 35 to 60 wt% of a compound of formula (1) and better still 40 to 55 wt% of a compound of formula (1).

17. The ophthalmic lens as claimed in any one of the preceding claims, **characterized in that** the two hydrophobic layers are deposited by evaporation.

18. The ophthalmic lens as claimed in any one of the preceding claims, **characterized in that** the number average molar mass of constituent A ranges from 2000 to 10000 g/mol.

19. An ophthalmic lens obtained by implementing at least the following steps:
1) obtaining an ophthalmic lens as claimed in any one of the preceding claims; and
2) removing the layer comprising a metal fluoride and the layer comprising a metalloid or metal oxide and/or a metalloid or metal hydroxide, if said layer comprising a metalloid or metal oxide and/or a metalloid or metal hydroxide is present on the ophthalmic lens,
the lens obtained having a static contact angle with water of 117° or more.
